# EUROPEAN PATENT APPLICATION

(11) **EP 1 271 793 A2**
(43) Date of publication of application: **02.01.2003**
(21) Application number: 02254306.0
(22) Date of filing: 20.06.2002
(51) Int. Cl.: H04B 1/38, H04Q 1/24

(54) **Portable communications device**

(30) Priority: 28.06.2001 US 892637
(71) Applicant: Nokia Corporation, 02150 Espoo (FI)
(72) Inventor: Johnson, Alan, Firmley, Surrey GU16 5BZ (GB); Rawdah, Omar, London, Greater London SW6 5LJ (GB); D'Souza, Winand, Bracknell, Berkshire RG12 0TT (GB); Phelps, Andrew, Southampton, Hampshire SO15 2GQ1 (GB)
(74) Representative: Johnson, Ian Michael

(57) **Abstract**

A portable communications device such as an integrated hands-free mobile telephone includes an antenna cavity which doubles as an audio cavity for an integrated hands-free speaker. By using the antenna cavity as an audio cavity, space within the telephone can be saved and the telephone made smaller overall without compromising audio performance.

## Description

This invention relates to a portable communications device which includes a speaker and an antenna, particularly but not exclusively to a device having an antenna cavity which forms the audio cavity for a hands-free speaker.

The demand for new features in portable communications equipment, such as mobile telephones, continues to rise, while the size of these devices remains the same or is required to become even smaller. Some of these new features relate to the audio aspects of mobile telephones. For example, integrated hands-free devices require a significant improvement in speaker quality compared with the earphone speaker arrangement provided in conventional mobile telephones. Similarly, an improvement in speaker quality is required as mobile telephone speakers are increasingly used to play polyphonic ring-tones, downloaded midi files, FM radio and so on.

An increase in speaker performance can be brought about by the use of an audio cavity, in much the same way as a conventional audio system loudspeaker requires a speaker enclosure. However, an audio cavity inevitably takes up space within the body of the telephone.

One of the objects of the present invention is to improve the usage of space within a portable communications device.

According to the invention, there is provided a portable communications device including a speaker and an antenna, the antenna being associated with an antenna cavity which is arranged to form an audio cavity for the speaker.

By sharing the volume which results from the presence of an antenna, for example in an internal antenna arrangement, with the speaker, the need for a separate audio cavity is removed, so saving space and allowing the overall size of the device to be minimised, without adverse effects on audio performance.

The antenna can be a patch antenna, for example a planar inverted-F antenna having a radiating conductor and a ground plane, the antenna cavity resulting from the required separation between the radiating conductor and the ground plane. Alternatively, the antenna can be a planar or meander antenna having a radiating conductor but not using a ground plane, the antenna cavity resulting from the need to avoid metallic objects in the vicinity of the radiating conductor.

The antenna may be internal to the antenna cavity. The antenna may be external to the antenna cavity. The antenna cavity may be defined partially/wholly by antenna support means. Preferably, the antenna support means defines a sealed volume which is used as an audio cavity.

The speaker can be located outside the antenna cavity and coupled to the cavity, for example by an audio duct. By locating the speaker outside the antenna cavity, adverse effects on antenna performance, caused by metal components in the speaker, can be avoided, while still making effective use of the antenna cavity as an audio cavity.

According to the invention, there is also provided a portable communications device including a speaker and an antenna, said antenna forming an antenna cavity within said device, said device including an audio cavity for the speaker, wherein the audio cavity and the antenna cavity are shared by said speaker and said antenna.

The invention further provides an antenna module for a portable communications device, said device including a housing portion and said antenna module including an antenna and an audio outlet for a speaker, the module being configured such that, when it is connected to said housing portion of the device, a sealed cavity is formed which comprises an audio cavity for a speaker mounted to the device.

In accordance with the invention, there is still further provided a method of assembling a portable communications device, the device comprising a housing, a speaker and an antenna module including an antenna, the method comprising the steps of mounting the speaker to the housing and mounting the antenna module to the housing to form a sealed volume between the antenna and the housing, said sealed volume including the speaker and said sealed volume comprising an audio cavity.

Embodiments of the invention will now be described, by way of example, with reference to the accompanying drawings, in which:
Figure 1 is a perspective view of a mobile telephone handset;
Figure 2 is an exploded view of the rear of the handset of Figure 1 illustrating an internal antenna module with an audio outlet;
Figure 3 is a schematic diagram of mobile telephone circuitry for use in the telephone handset of Figure 1;
Figure 4 is a simplified cross-sectional view of the rear of the handset shown in Figure 2, when assembled;
Figure 5 is a schematic diagram illustrating an antenna/audio cavity in a PIFA antenna arrangement;
Figures 6a - c illustrate various forms of internal meander antennas;
Figure 7 is a schematic diagram illustrating an antenna/audio cavity in a meander antenna arrangement;
Figure 8 is a schematic diagram illustrating a speaker arrangement in which an audio cavity is used as a front volume for a speaker;
Figure 9 is a schematic diagram illustrating a speaker arrangement in which an audio duct connects a speaker to an audio cavity; and
Figure 10 is a schematic diagram illustrating a further embodiment of the invention, in which a speaker is located in the centre of an antenna arrangement.

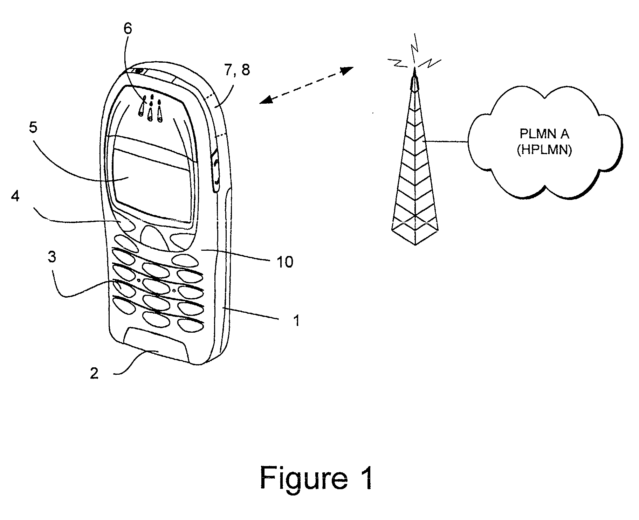

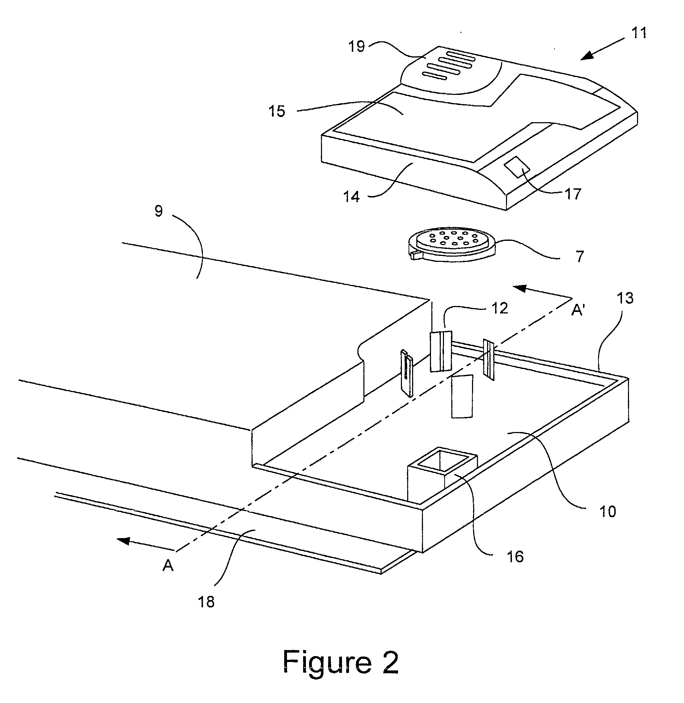

Referring to Figures 1 and 2, a mobile station in the form of a mobile telephone handset 1 includes a microphone 2, keypad 3, a hands-free mode selection key 4, an LCD display 5, an earphone speaker 6, a hands-free speaker 7 and an internal antenna 8. The location of the hands-free speaker 7 and antenna 8 are illustrated in Figure 2, which shows the back of the handset 1 with a rear cover (not shown) removed.

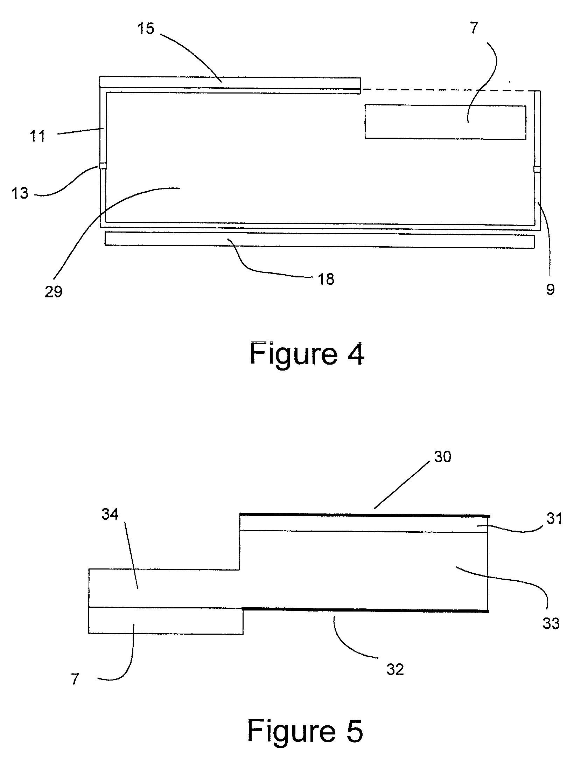

The back of the handset 1 comprises a chassis 9 having a recessed portion 10 for receiving an antenna module 11. The recessed portion includes a speaker clip arrangement 12 for receiving the hands-free speaker 7. The recessed portion 10 has a lip 13, so that when the antenna module 11 is fitted to the chassis 9, the recessed portion 10 and antenna module 11 form a sealed cavity between them, which will be described in more detail below with reference to Figure 4.

The antenna module 11 comprises an integrally moulded plastic substrate 14 with an antenna pattern 15 plated onto it to form part of the antenna 8, for example by using the moulded interconnect device (MID) moulding process. A feed duct 16 on the chassis mates with a corresponding outlet 17 in the antenna module 11 to permit the antenna to be connected to the PCB 18, which is mounted to the underside of the chassis 9. The antenna module 11 also includes an integrally moulded audio outlet 19 for the hands-free speaker 8.

The antenna module 11 is assembled to the chassis 9 by clipping the speaker 7 into the speaker clip arrangement 12 and fitting the antenna module 11 onto the recessed portion 10. In an alternative embodiment, there is a speaker clip arrangement in the antenna module 11 and the speaker 7 is clipped into the antenna module 11 prior to assembly to the chassis 9.

The mobile station 1 is operable to communicate through cellular radio links with individual PLMNs (public land mobile network) shown schematically in Figure 1 as PLMN A, for example a GSM 1800 MHz network.

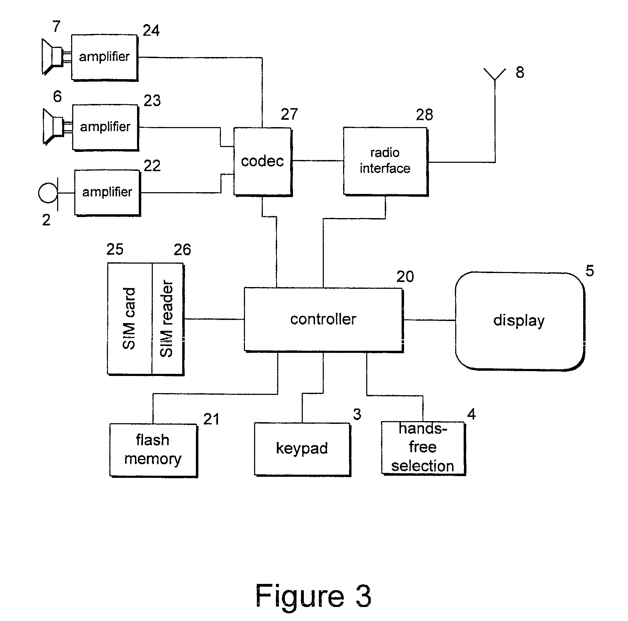

Figure 3 illustrates the major circuit components of the telephone handset 1. Signal processing is carried out under the control of a digital micro-controller 20 which has an associated flash memory 21. Electrical analogue audio signals are produced by microphone 2 and amplified by pre-amplifier 22. Similarly, analogue audio signals are fed to the earphone speaker 6 through an amplifier 23 or to the hands-free speaker 7 through an amplifier 24, depending on which speaker is selected. The micro-controller 20 receives instruction signals from the keypad 3 and hands-free mode selection key 4 and controls operation of the LCD display 5. The hands-free mode selection key 4 is used to instruct the micro-controller 20 to switch between the earphone and hands-free speakers 6, 7.

Information concerning the identity of the user is held on a smart card 25 in the form of a GSM SIM card which contains the usual GSM international mobile subscriber identity (IMSI) and an encryption key Kᵢ that is used for encoding the radio transmission in a manner well known per se. The SIM card is removably received in a SIM card reader 26.

The mobile telephone circuitry includes a codec 27 and an rf stage 28 feeding the antenna 7.

Figure 4 is a simplified cross-sectional view of the handset 1 along the line A-A' in Figure 2, not showing the speaker clip arrangement or other incidental details. When the antenna module 11 is assembled to the chassis 9, a cavity 29 is formed, which acts as an audio cavity for the speaker 7, in this case a sealed back volume. A common or shared antenna and audio cavity is therefore provided. To avoid adverse effects on antenna operation caused by metal components within the hands-free speaker 7, the speaker is not mounted directly underneath the antenna 8, but adjacent to it. The antenna pattern 15 together with a ground plane 18 formed by the PCB, together form the antenna 8, which is known as a patch antenna and more specifically a planar inverted-F antenna (PIFA).

Figure 5 illustrates the general configuration of an antenna of the PIFA type, comprising a radiating conductive plate 30 mounted on a dielectric support 31 and a ground plane 32, for example the PCB to which the handset components are mounted or the surface of the RF screening cans mounted to the PCB. For correct operation, a separation of around 6 - 7mm is required between the conductive plate 30 and the ground plane 32. Therefore, with a typical dielectric thickness of 1mm, the gap of 5 - 6mm between the dielectric 31 and the ground plane 32 is available to be used as an audio cavity 33. The smaller cavity 34 above the speaker 7 acts as a duct to port the audio signal into the larger audio cavity 33 between the antenna plates 30, 32.

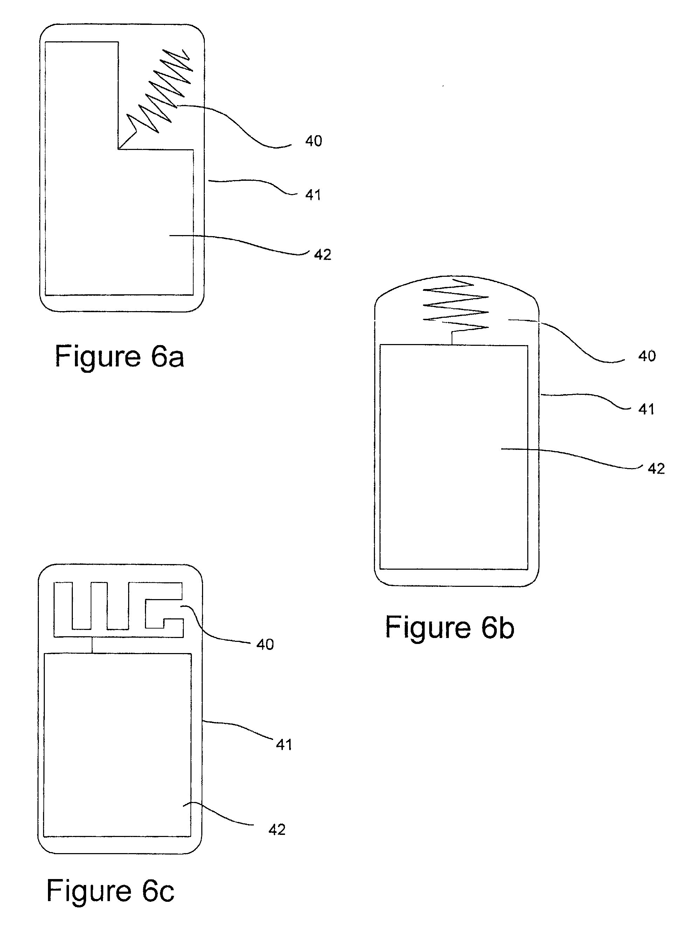

Many different types of internal antenna are suitable to implement the invention, including plate antennas and meander type antennas, three examples of which are shown in Figures 6a - c. A meander type antenna comprises an antenna element 40 arranged within a handset casing 41 in such a way that the handset PCB 42 does not act as a ground plane for the antenna. With this type of antenna, it is therefore important that there are no metallic components within the casing beneath the antenna element, since such elements would act as a ground plane and affect antenna operation. This makes the space beneath the antenna element suitable for use as an audio cavity.

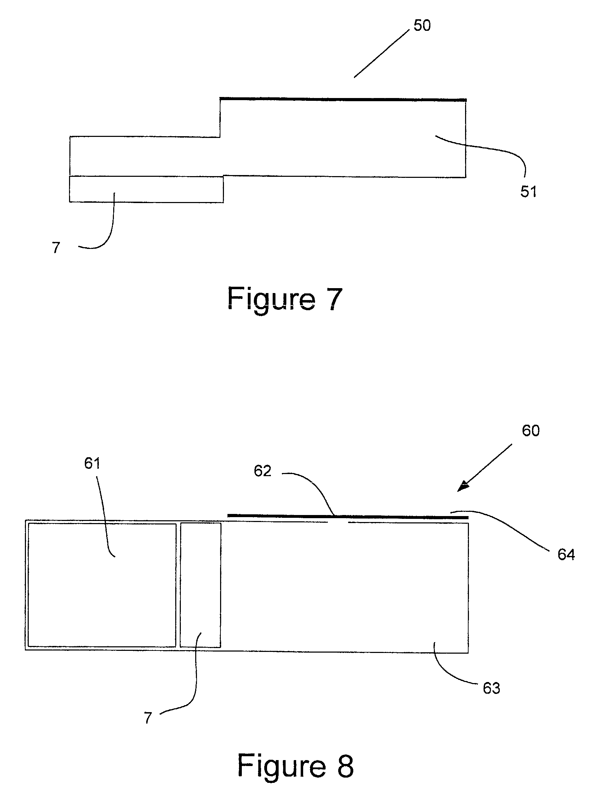

A meander antenna arrangement analogous to the PIFA antenna arrangement shown in Figure 5 is illustrated in Figure 7, comprising an antenna pattern 50 above an audio cavity 51.

Figure 8 illustrates a speaker arrangement in a telephone handset 60 in which a speaker 7 is mounted against a battery 61. An audio outlet 62 is located so that an audio cavity 63 beneath an antenna 64 forms a front volume for the speaker 7, rather than a back volume. In alternative embodiments, combined front and back volumes are envisaged.

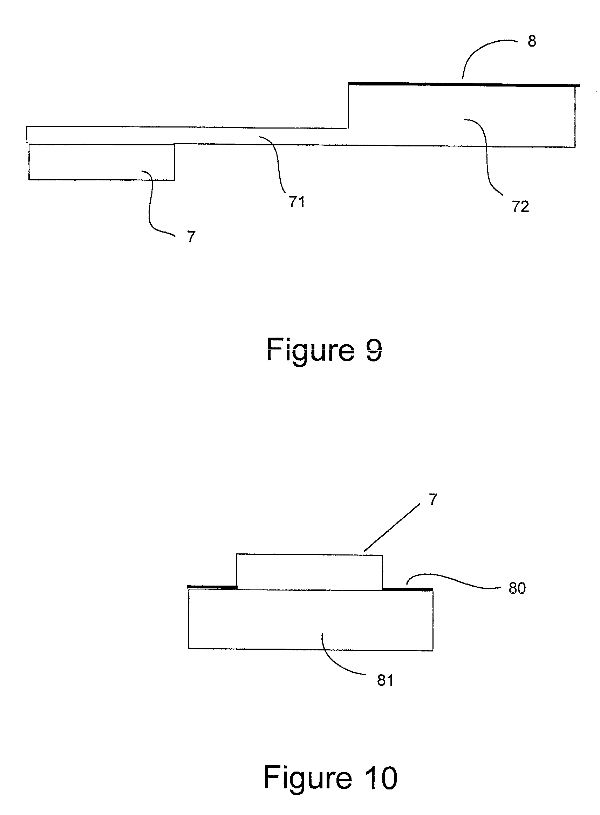

The various alternative embodiments described are not intended to be limiting; the particular arrangement used in any case by which the audio and antenna cavities are shared depends on the layout and requirements of the particular communications device in question. For example, in the embodiment shown in Figure 9, the speaker 7 can be separated from the antenna 8 and an audio duct 71 used to port the audio signal to the antenna/audio cavity 72. In a further embodiment shown in Figure 10, the speaker 7 is located in the centre of a plate antenna, with active antenna elements 80 surrounding it, over an antenna/audio cavity 81.

## Claims

1. A portable communications device including a speaker and an antenna, the antenna being associated with an antenna cavity which is arranged to form an audio cavity for the speaker.

2. A portable communications device according to claim 1, wherein the antenna comprises a ground plane and a radiating conductor spaced from the ground plane, the antenna cavity comprising the space between the radiating conductor and the ground plane.

3. A portable communications device according to claim 2, further comprising a printed circuit board to which device components are mounted, wherein the ground plane comprises the printed circuit board.

4. A portable communications device according to claim 2, further comprising a printed circuit board to which at least one radio frequency screening can is mounted, wherein the ground plane comprises a surface of said at least one of the screening cans.

5. A portable communications device according to claim 2, wherein the antenna comprises a patch antenna.

6. A portable communications device according to claim 5, wherein the antenna comprises a planar inverted-F antenna (PIFA).

7. A portable communications device according to claim 1, including a housing to which the antenna is mounted, wherein the antenna includes a radiating element spaced from the housing and the antenna cavity comprises the space between the radiating element and the housing.

8. A portable communications device according to claim 7, wherein the antenna is selected from a meander antenna or a planar antenna.

9. A portable communications device according to claim 1, wherein the antenna is internal to the antenna cavity.

10. A portable communications device according to claim 1, wherein the antenna is external to the antenna cavity.

11. A portable communications device according to claim 1, wherein the antenna cavity is defined by antenna support means.

12. A portable communications device according to claim 11, wherein the antenna support means defines a sealed volume which is used as an audio cavity.

13. A portable communications device according to claim 1, wherein the speaker is located outside the antenna cavity.

14. A portable communications device according to claim 13, wherein the speaker is located adjacent to the antenna.

15. A portable communications device according to claim 13, further comprising a duct for connecting the speaker to the audio cavity.

16. A portable communications device according to claim 1, wherein the audio cavity comprises a sealed volume.

17. A portable communications device according to claim 1, wherein the audio cavity comprises a back volume for the speaker.

18. A portable communications device according to claim 1, wherein the audio cavity comprises a front volume for the speaker.

19. A portable communications device according to claim 1, comprising a mobile telephone.

20. A portable communications device according to claim 1, wherein the speaker comprises a hands-free speaker.

21. A portable communications device including a speaker and an antenna, said antenna forming an antenna cavity within said device, said device including an audio cavity for the speaker, wherein the audio cavity and the antenna cavity are shared by said speaker and said antenna.

22. An antenna module for a portable communications device, said device including a housing portion and said antenna module including an antenna and an audio outlet for a speaker, the module being configured such that, when it is connected to said housing portion of the device, a sealed cavity is formed which comprises an audio cavity for a speaker mounted to the device.

23. An antenna module according to claim 22, including means for receiving a speaker.

24. An antenna module according to claim 23, wherein said means comprise a clip arrangement.

25. A method of assembling a portable communications device, the device comprising a housing, a speaker and an antenna module including an antenna, the method comprising the steps of mounting the speaker to the housing and mounting the antenna module to the housing to form a sealed volume between the antenna and the housing, said sealed volume including the speaker and said sealed volume comprising an audio cavity.

26. A method according to claim 25, wherein the step of mounting the speaker to the housing comprises first mounting the speaker to the antenna module so that the step of mounting the antenna module to the housing simultaneously mounts the speaker to the housing.
